(19) **Europäisches Patentamt / European Patent Office / Office européen des brevets**

(11) **EP 3 078 134 B1**

(12) **EUROPEAN PATENT SPECIFICATION**

(45) Date of publication and mention
of the grant of the patent:
**09.01.2019 Bulletin 2019/02**

(21) Application number: **14701153.0**

(22) Date of filing: **10.01.2014**

(51) Int Cl.:
*H04B 10/50* [(2013.01)]     *H04B 10/532* [(2013.01)]
*H04B 10/556* [(2013.01)]     *H04B 10/516* [(2013.01)]
*H04B 10/69* [(2013.01)]     *H04J 14/06* [(2006.01)]

(86) International application number:
**PCT/EP2014/050405**

(87) International publication number:
**WO 2015/104058 (16.07.2015 Gazette 2015/28)**

(54) **METHOD FOR DUAL POLARIZATION COHERENT OPTICAL MODULATION**

VERFAHREN ZUR DOPPELPOLARISATIONSKOHÄRENTEN OPTISCHEN MODULATION

PROCÉDÉ POUR UNE MODULATION OPTIQUE COHÉRENTE À DOUBLE POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.10.2016 Bulletin 2016/41**

(73) Proprietor: **Huawei Technologies Co., Ltd.
Longgang District
Shenzhen, Guangdong 518129 (CN)**

(72) Inventor: **STOJANOVIC, Nebojsa
80992 Munich (DE)**

(74) Representative: **Kreuz, Georg Maria et al
Huawei Technologies Duesseldorf GmbH
Riesstraße 25
80992 München (DE)**

(56) References cited:
**EP-A1- 2 385 637       WO-A1-2013/139368
US-A1- 2013 034 354    US-B1- 6 538 787**

EP 3 078 134 B1

## Description

TECHNICAL FIELD

The present disclosure relates to a method for dual polarization coherent optical modulation/demodulation, a dual polarization optical modulation device and a dual polarization optical demodulation device. The disclosure further relates to coherent optical receivers using enhanced digital signal processing.

BACKGROUND

An important goal of long-haul optical fiber systems is to transmit the highest data throughput over the longest distance without signal regeneration in optical-electrical-optical regenerators. Given constraints on the bandwidth imposed by optical amplifiers and ultimately by the fiber itself, it is important to maximize spectral efficiency. Most current systems use binary modulation formats, such as on-off keying encoding one bit per symbol. Advanced modulation formats in combination with coherent receivers enable high capacity and spectral efficiency. Polarization multiplexing, quadrature amplitude modulation and coherent detection are seen as a winning combination for the next generation of high-capacity optical transmission systems since they allow information encoding in all the available degrees of freedom. Commercial devices using Quadrature Amplitude Modulation (QAM) constellation are already available in 40 and 100 Gb/s optical systems. The 16-QAM is likely a candidate for 400 Gb/s transmission systems.

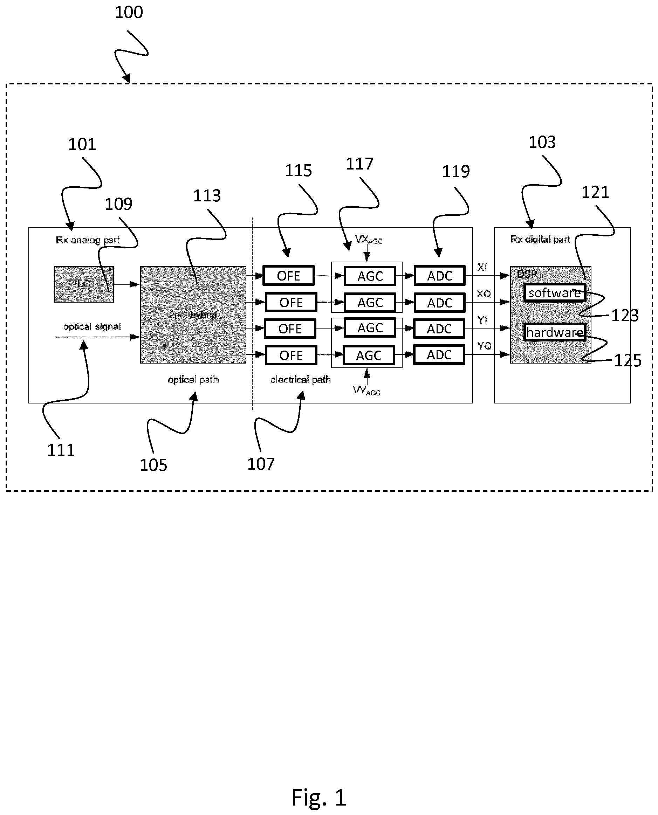

A block diagram of the coherent optical receiver 100 is shown in Fig. 1. The receiver 100 includes an RX analog part 101 and an RX digital part 103. The RX analog part 101 includes an optical path 105 and an electrical path 107. Since the digital signal is mapped into both polarization (denoted by X and Y) a 90° hybrid 113 is used to mix the optical input signal 111 with a local oscillator (LO) 109 signal that results in four output signals (two signals per polarization). The optical signal is converted to electrical signal via an optical front end (OFE) 115 consisting of photo diodes (single PIN or balanced) and a transimpedance amplifier (TIA). As signal power may vary over time, fast automatic gain control blocks 117 compensate for signal power variations. There are four AGC blocks 117 that can also be an integral part of the OFE blocks 115. Often due to realization complexity, a pair of AGC blocks 117 is controlled by one control signal ($VX_{AGC}$ for X polarization and $VY_{AGC}$ for Y polarization; see Fig. 1). However, four AGC blocks 117 can be controlled by four independent control voltages (not depicted in Fig. 1). Signals after the AGC blocks 117 are quantized by the use of analog-to-digital converters (ADCs) 119. Four quantized digital data streams XI, XQ, YI, YQ, i.e., in-phase and quadrature components of both polarizations X and Y, are further processed in a digital signal processing (DSP) block 121 that is divided into two parts, a fast DSP hardware part 125 and a slow DSP software part 123. The DSP block 121 is part of the RX digital part 103 of the receiver 100. In the DSP block 121, compensation for chromatic dispersion (CD), polarization mode dispersion (PMD), polarization rotation, nonlinear effects, LO noise, LO frequency offset, etc. is performed. Estimation of slow processes (LO frequency offset, CD etc.) can be done in the software part 123 of the DSP circuit or DSP block 121.

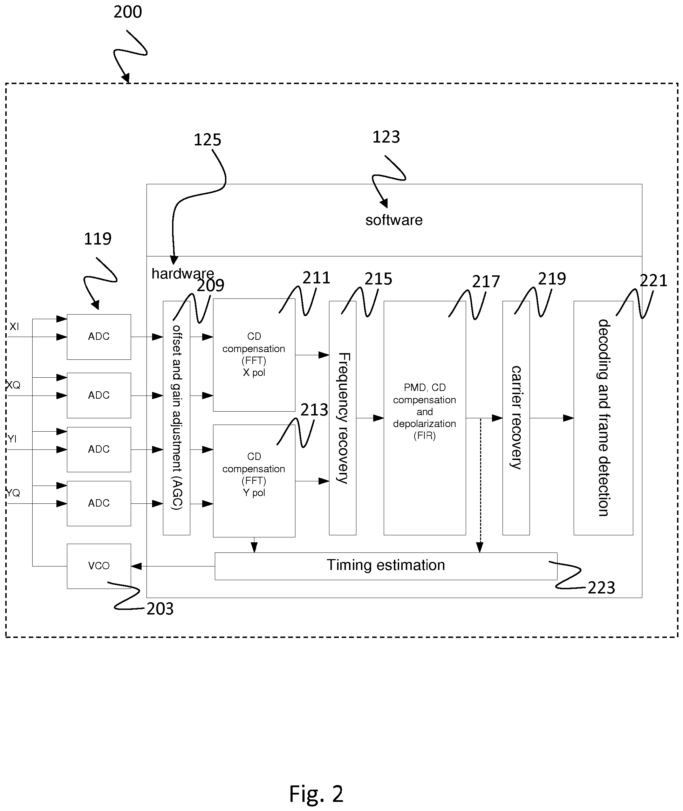

Basic DSP blocks of the DSP circuit 121 of Fig. 1 are presented in the receiver 200 depicted in Fig. 2. After the four quantized digital data streams XI, XQ, YI, YQ have passed the AD converters 119 controlled by a VCO 203 and an offset and gain correction circuit 209 the four signals are equalized for chromatic dispersion in frequency domain using two fast Fourier transformation (FFT) blocks 211, 213. Frequency offset is removed in a frequency recovery block 215. Polarization tracking, PMD compensation and residual CD compensation are done in time domain using finite impulse response (FIR) filters 217 arranged in butterfly structure. Both residual frequency offset compensation and carrier phase recovery are done in a carrier recovery block 219. When differential decoding is applied at the transmitter side, a differential decoder is used in a decoding and frame detection block 221. Timing estimation is performed in a timing estimation block 223. Next generation optical transceivers should be flexible in terms of baud rate and modulation formats. Depending on optical link parameters like distance and link quality the management center will select appropriate baud rate and modulation format. Modulation formats using amplitude, phase or both of them to carry information are known since years ago. Most popular modulation formats are using PSK or QAM constellations. Currently, BPSK (2-PSK), 4-PSK (4QAM), and 16QAM modulation formats are under investigations to be used in optical coherent systems. BPSK and 4-PSK modulation formats are already deployed. Next step seems to be 16QAM modulation format in 400 Gb/s optical systems for metro applications (up to 800 km or even more).

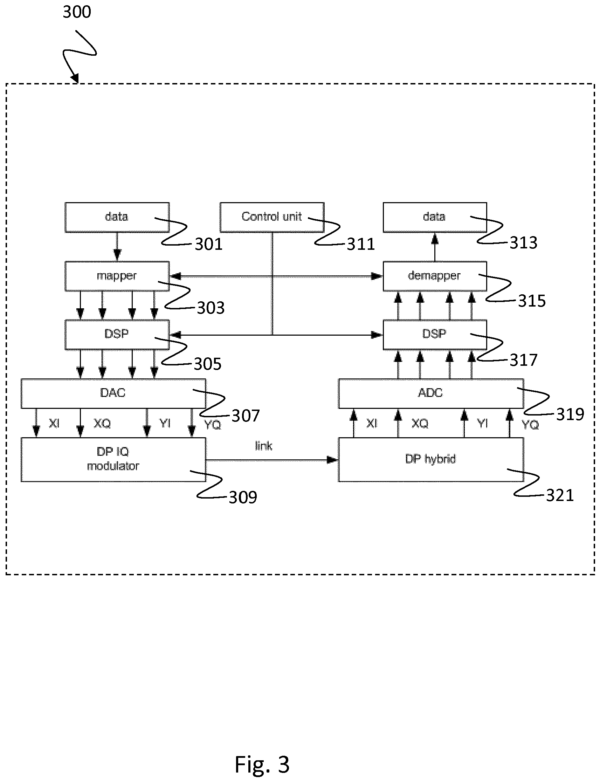

A control unit 311 of an optical transceiver 300 shown in Fig. 3 selects modulation format and baud rate resulting in final bit rate. The mapper 303 maps incoming data bits 301 into the selected constellation. Tx DSP 305 processes data to compensate for circuits imperfections, shape signal spectra, compensate for channel imperfections, etc. A DAC 307 produces four signal components XI, XQ, YI and YQ of a dual polarized signal. A dual polarization modulator 309 sends these signals in both polarizations via an optical link. The dual polarized optical signal is received by a dual polarization hybrid 321, quantized by an ADC 319 and passed to the Rx DSP 317 before the four signal components XI, XQ, YI and YQ of the dual polarized signal are passing a demapper 315 for reproducing data 313. The control unit 311 selects the DSP algorithms required for certain modulation format. Some algorithms are universal for most modulation formats. Nevertheless, there are algorithms that cannot cover all modulation formats. Some algorithms can change only algorithm parameters and cover most modulation formats. However, some of them require radical changes.

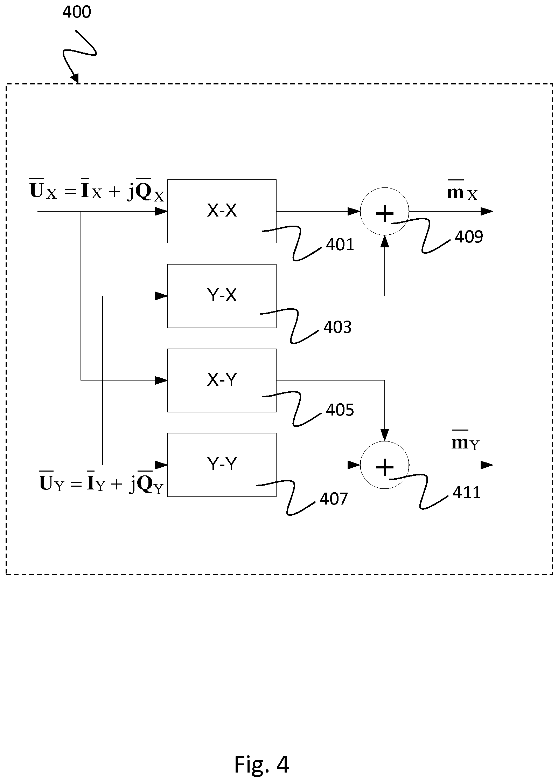

The FIR filter 217 shown in Fig. 2 is a two-input two output system. This filter 217 extracts two polarizations from the incoming signal, also called signal depolarization. Mainly, the filter compensates for residual chromatic dispersion and polarization mode dispersion. The FIR filter butterfly structure 400 is shown in Fig. 4. The FIR filter structure 400 includes four FIR filters, a first filter denoted as X-X filter 401, a second filter denoted as Y-X filter 403, a third filter denoted as X-Y filter 405 and a fourth filter denoted as Y-Y filter 407. Each filter 401, 403, 405 and 407 has an odd number of taps M so that:

the X-X filter 401 takes complex valued data from the X-polarization and outputs to the X-polarization;
the Y-X filter 403 takes complex valued data from the Y-polarization and outputs to the X-polarization;
the X-Y filter 405 takes complex valued data from the X-polarization and outputs to the Y-polarization; and
the Y-Y filter 407 takes complex valued data from the Y-polarization and outputs to the Y-polarization.

Filter outputs are added by two adders 409, 411 such that two complex values are output:

$$\overline{m}_X = \overline{\mathbf{W}}_X{}^H \overline{\mathbf{U}}_X$$

$$\overline{m}_Y = \overline{\mathbf{W}}_Y{}^H \overline{\mathbf{U}}_Y \quad ,$$

Where

$$\overline{\mathbf{U}}_X = \begin{pmatrix} \overline{\mathbf{u}}_X \\ \overline{\mathbf{u}}_Y \end{pmatrix}; \overline{\mathbf{W}}_X = \begin{pmatrix} \overline{\mathbf{h}}_{XX} \\ \overline{\mathbf{h}}_{YX} \end{pmatrix} \quad \overline{\mathbf{U}}_Y = \begin{pmatrix} \overline{\mathbf{u}}_Y \\ \overline{\mathbf{u}}_X \end{pmatrix}; \overline{\mathbf{W}}_X = \begin{pmatrix} \overline{\mathbf{h}}_{YY} \\ \overline{\mathbf{h}}_{XY} \end{pmatrix}$$

and complex vector $\overline{h}$ presents the complex filter coefficients. Upper script H denotes the Hermitian complex valued vector (i.e. conjugate and transpose).

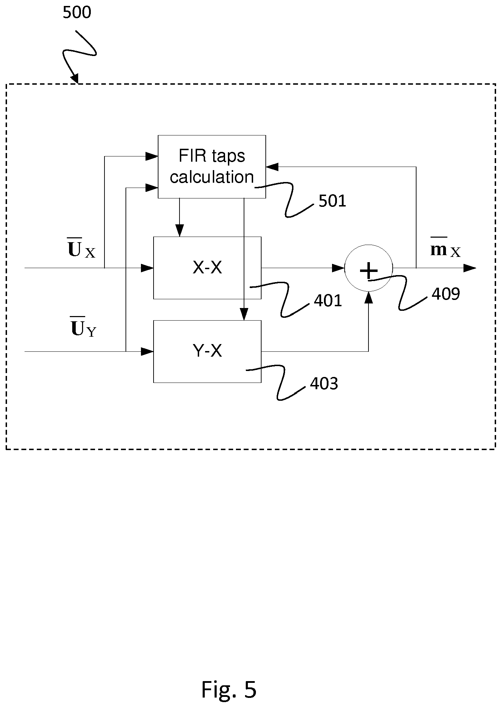

In most applications, the FIR filter taps are updated using the constant modulus algorithm (CMA), e.g. as described by "G. Proakis, Digital Communications, 4th ed. (McGraw-Hill, New York, 2001)" and partly shown in Fig. 5. In Fig. 5, the X polarization partial filter structure 500 including the upper filters 401, 403 and the adder 409 of the filter structure 400 is depicted producing the X polarized output. The CMA algorithm is processed by the FIR taps calculation block 501. In the following, an oversampled system with two samples per symbol (samples A and B) is described. Oversampling is a good way to speed up convergence and to relax DSP algorithms. This algorithm forces the first sample (A) onto the unit circle. FIR taps are updated using the following equation:

$$\overline{\mathbf{W}}_{k+1} = (1 - \alpha)\overline{\mathbf{W}}_k + \mu e_k \overline{m}_k{}^* \overline{\mathbf{U}}_k$$

$$e_k = 1 - \left|\overline{m}_k\right|^2$$

where $\mu$ is the update coefficient and $\alpha$ is the leakage factor. The error $e_k$ is calculated using A samples. This method is very efficient in MPSK systems. This algorithm is also often used for QAM signals in pre-convergence mode enabling the starting coefficients that are later refined using more sophisticated algorithms like decision added FIR filter update.

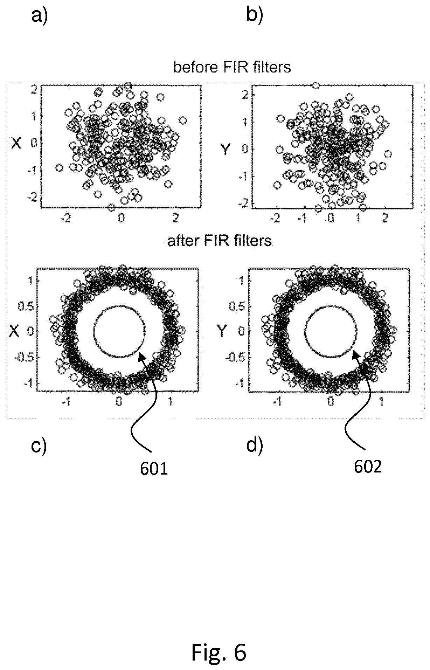

In Fig. 6 QPSK signal constellations are presented before (Fig. 6a and 6b) and after (Fig. 6c and 6d) FIR filters for both polarizations X (Fig. 6a and 6c) and Y (Fig. 6b and 6d). The signal was free of chromatic dispersion but still corrupted by frequency offset and polarization mode dispersion (PMD). It is noticeable that after FIR filtering the output constellation is very clean around origin (space within cycles 601, 602).

Decreasing roll-off factor (ROF) destroys clock tone quality. The timing error detector characteristic (TEDC) becomes very small therefore generating large and uncontrolled jitter. TEDC simulation results of Gardner phase detector (PD) for QPSK modulation format at Eb/N0=3dB show serious clock tone degradation for small ROF values. Sinusoidal TEDC becomes acceptable for ROF values greater than 0.3.

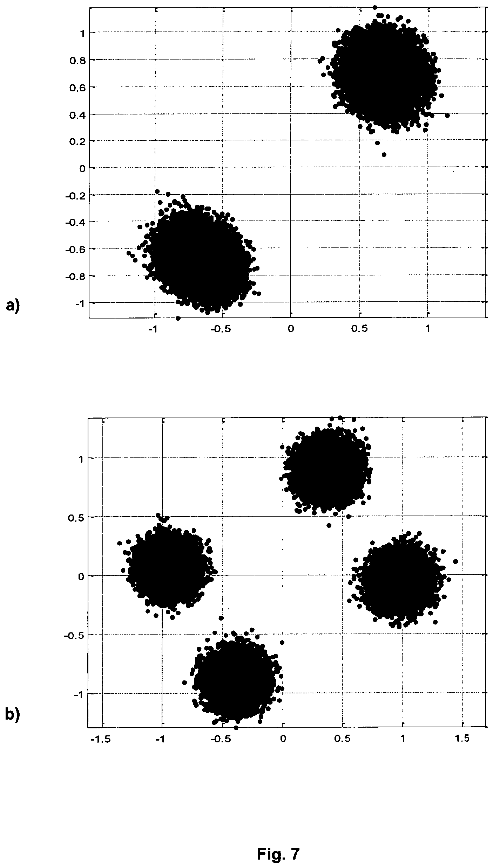

When BPSK modulation format is used the constant modulus algorithm fails since insufficient signal statistics is available to grant the filter convergence. Higher order PMD was simulated with mean differential group delay (DGD) of 25 ps in 28 Gb/s BPSK systems using both polarizations (56 Gb/s transmission). The expected BPSK constellation after the FIR filter is shown in Figs. 7a and 7b. Only two constellation points are derived when the filter coefficients appropriately converge (Fig. 7a). This was achieved by using the training sequence. In a second simulation, the CMA algorithm was used without training sequence support. The constellation shown in Fig. 7b was obtained. It can be observed, that four constellation points exist and they come from both polarizations. That means that the FIR filter delivers a signal consisting of signals from both polarizations. This effect does not allow any further signal processing.

WO 2013/139368 A1 discloses a phase shift keying optical modulation apparatus comprising optical phase shifting apparatus and an optical modulator.

EP 2385637 A1 discloses a method in a transmitting node for transmitting data information in a modulated optical carrier signal over an optical channel in an optical communications network to a receiving node.

US 6538787 B1 discloses a polarization mode dispersion emulator includes one or more modular "cells" that emulate PMD.

SUMMARY

It is the object of the invention to provide a technique for improved performance in coherent optical transmission.

This object is achieved by the features of the independent claims. Further implementation forms are apparent from the dependent claims, the description and the figures.

In order to describe the invention in detail, the following terms, abbreviations and notations will be used:

| | |
|---|---|
| TEDC: | Timing Error Detector Characteristic |
| PD: | Phase Detector |
| DAC: | digital-to-analog converter |
| ADC: | analog-to-digital converter |
| BPSK: | binary phase shift keying |
| QPSK: | quaternary phase shift keying |
| QAM: | Quadrature Amplitude Modulation |
| DSP: | Digital Signal Processing |
| CMA: | Constant Modulus Algorithm |
| MMA: | Multi Modulus Algorithm |
| DGD: | differential group delay |
| FIR: | Finite Impulse Response. |
| PMD: | polarization mode dispersion |
| CD: | chromatic dispersion |
| ROF: | roll-off factor |
| LO: | local oscillator |
| OFE: | optical front end |
| AGC: | automatic gain control |
| TIA: | transimpedance amplifier |
| TX: | transmitter |
| RX: | receiver |
| CR: | carrier recovery |
| PRBS: | pseudo-random binary sequence |
| DP: | dual polarization |
| X: | first polarization component of dual polarization signal |
| Y: | second polarization component of dual polarization signal |

According to a first aspect, the invention relates to a method for dual polarization coherent optical modulation, the method comprising: mapping data bits to a first constellation according to a first modulation format to provide first constellation data bits; mapping the first constellation data bits to a second constellation according to a second modulation format to provide second constellation data bits, wherein the second constellation comprises a higher number of constellation points than the first constellation; and modulating the second constellation data bits onto a dual polarized optical signal, wherein the optical signal comprises a first polarization component (X) and a second polarization component (Y).

When the second constellation has a higher number of constellation points than the first constellation, the signal statistics provide better excitation for adaptive filter algorithms such as CMA in the receiver adjusting the adaptation filter. The optical signal modulated according to the second modulation format is more "white" than an optical signal modulated according to the first modulation format. That property enables convergence of the compensation filter in the receiver when using blind equalization.

In a first possible implementation form of the method according to the first aspect, the second constellation comprises a multiple of the constellation points of the first constellation.

A multiple of the constellation points of the first constellation can be easily implemented, e.g. by using scrambling.

In a second possible implementation form of the method according to the first aspect as such or according to the first implementation form of the first aspect, constellation points of the first constellation are a subset of constellation points of the second constellation.

When constellation points of the first constellation are a subset of constellation points of the second constellation reconstruction of the first constellation points in the receiver is easy to implement, e.g. by removing the additional points of the second constellation that are not part of the subset.

In a third possible implementation form of the method according to the second implementation form of the first aspect, constellation points of the second constellation are generated based on scrambling the first constellation data bits.

Scrambling is easy to implement, e.g. by using a PRBS generator and an adder or by using a shift register and an adding unit.

In a fourth possible implementation form of the method according to the first aspect as such or according to any of the preceding first implementation forms of the first aspect, the first modulation format comprises a binary phase shift keying, BPSK, modulation format or any irregular constellation which a constant modulus algorithm, CMA is unable to reliably detect; and the second modulation format comprises any regular constellation which a constant modulus algorithm, CMA is able to reliably detect, in particular one of the following: a quadrature phase shift keying, PSK, modulation format, a quadrature amplitude, QAM, modulation format.

The constellation of the first modulation format can be mapped to a constellation of the second modulation format such that a non-detectable optical signal can be transformed into a detectable optical signal when using a simple CMA algorithm.

In a fifth possible implementation form of the method according to the first aspect as such or according to any of the preceding first implementation forms of the first aspect, the first modulation format comprises a binary phase shift keying, BPSK, modulation format or any irregular constellation which a multi modulus algorithm, MMA is unable to reliably detect; and the second modulation format comprises any regular constellation which a multi modulus algorithm, MMA is able to reliably detect, in particular one of the following: a quadrature phase shift keying, PSK, modulation format, a quadrature amplitude, QAM, modulation format.

The constellation of the first modulation format can be mapped to a constellation of the second modulation format such that a non-detectable optical signal can be transformed into a detectable optical signal when using a more complex MMA algorithm.

According to a second aspect, the invention relates to a method for dual polarization coherent optical demodulation, the method comprising: coherently receiving a dual polarized optical signal being modulated according to a second modulation format; depolarizing the dual-polarized optical signal by using a constant modulus algorithm, CMA to provide a depolarized optical signal; mapping second constellation points of a second constellation of the depolarized optical signal to first constellation points arranged according to a first constellation of a first modulation format; and mapping the first constellation points to first constellation data bits according to a first modulation format, wherein the first constellation comprises a lower number of constellation points than the second constellation.

When the second constellation has a higher number of constellation points than the first constellation, the CMA is able to detect the signal based on the higher number of constellation points of the second constellation. The depolarizing may be such that both polarizations of the dual-polarized optical signal are independent.

In a first possible implementation form of the method according to the second aspect, mapping the second constellation points to first constellation points comprises descrambling, in particular by using phase rotators, the second constellation points with a known descrambling sequence.

When using a known descrambling sequence, the same PRBS initial sequence can be used for transmission and reception. The functionality of PRBS generating can be reduced to the functionality of bit shifting thereby reducing the complexity of the overall transmission and reception.

In a second possible implementation form of the method according to the first implementation form of the second aspect, the method comprises shifting the descrambling sequence until the derived constellation points are arranged according to the first constellation.

By simple shifting of the descrambling sequence convergence of the method can be reached depending on the length of the shift sequence. For a sufficient length of 8 convergence can be reached after a maximum of 8 shifts.

In a third possible implementation form of the method according to the second aspect as such or according to any of the preceding implementation forms of the second aspect, depolarizing the dual polarized optical signal comprises: filtering the dual polarized optical signal by a two input two output complex FIR filter to provide a first polarization component (X) and a second polarization component (Y) of the depolarized optical signal.

Using a two input two output complex FIR filter for filtering allows exploiting available functional blocks of an optical coherent receiver without the need for changing software or hardware.

In a fourth possible implementation form of the method according to the third implementation form of the second aspect, the method comprises adjusting the two input two output FIR filter by blind equalization, in particular based on a constant modulus algorithm.

When adjusting the FIR filter by blind equalization, in particular by CMA or MMA, no training sequence is required. The transmitter does not need to be changed.

According to a third aspect, the invention relates to a dual polarization optical modulation device, comprising: a first mapper configured to map data bits to a first constellation according to a first modulation format to provide first constellation data bits; a second mapper configured to map the first constellation data bits to a second constellation according to a second modulation format to provide second constellation data bits, wherein the mapping comprises scrambling the first constellation data bits with a scrambling sequence; and a modulator configured to provide a dual polarization optical signal based on the second constellation data bits.

By scrambling the first constellation data bits with a scrambling sequence, the first constellation points can be easily transformed to second constellation points.

In a first possible implementation form of the dual polarization optical modulation device according to the third aspect, the second constellation has a higher number of constellation points than the first constellation.

When the second constellation has a higher number of constellation points than the first constellation, the signal statistics provide better excitation for adaptive filter algorithms such as CMA in the receiver adjusting the adaptation filter.

Aspects of the invention provide techniques for polarization decomposition in dual polarization coherent optical systems using quasi BPSK modulation format with the following benefits. The techniques can be implemented in BPSK transceivers. The techniques can be implemented in transceivers using higher order modulation formats as e.g. 4-PSK (QPSK). The transmitted signal may have twice more constellation points appropriately selected to enable CMA functionality. The techniques do not deteriorate the original BPSK performance since the key DSP algorithms are based on BPSK signal. The techniques are applicable in systems using irregular constellations to support channel acquisition.

BRIEF DESCRIPTION OF THE DRAWINGS

Further embodiments of the invention will be described with respect to the following figures, in which:

Fig. 1 shows a block diagram illustrating a coherent optical receiver 100;

Fig. 2 shows a block diagram illustrating a receiver 200 including basic DSP blocks of the DSP circuit 121 depicted in Fig. 1;

Fig. 3 shows a block diagram illustrating an optical transceiver 300 including a control unit 311 for selecting modulation format and baud rate;

Fig. 4 shows a block diagram illustrating an FIR filter butterfly structure 400 of a receiver 200 shown in Fig. 2;

Fig. 5 shows a block diagram illustrating an X polarization partial filter structure 500 of the FIR filter structure 400 shown in Figs. 4 and 5;

Fig. 6a and 6b show QPSK signal constellations before FIR filtering using an FIR filter structure as shown in Figs. 4 and 5;

Fig. 6c and 6d show QPSK signal constellations after FIR filtering using an FIR filter structure as shown in Figs. 4 and 5;

Fig. 7a shows filter convergence of an FIR filter structure as shown in Figs. 4 and 5 with training sequence support;

Fig. 7b shows filter convergence of an FIR filter structure as shown in Figs. 4 and 5 without training sequence support;

Fig. 8 shows a block diagram illustrating basic TX BPSK and QPSK blocks of a coherent optical transmitter 800 according to an implementation form;

Fig. 9 shows a block diagram illustrating a coherent optical BPSK transmitter 900 including modifications for enabling CMA functionality according to an implementation form;

Fig. 10 shows a block diagram illustrating a BPSK coherent optical transmitter 1000 including BPSK signal scrambling according to an implementation form;

Fig. 11 shows a block diagram illustrating a coherent optical BPSK transceiver 1100 including BPSK signal scrambling and descrambling according to an implementation form;

Fig. 12 a) to h) show receiver output signal constellations of the transceiver 1100 depicted in Fig. 11 for 8 different shifts of the scrambling sequence according to an implementation form;

Fig. 13 a) to c) show receiver output signal constellations of the transceiver 1100 depicted in Fig. 11 for BPSK scrambled transmission according to an implementation form, where

Fig. 13a) shows the constellation after the FIR filter,
Fig. 13b) shows the constellation after the descrambling and
Fig. 13c) shows the constellation after carrier recovery;

Fig. 14 shows a schematic diagram illustrating a method 1400 for dual polarization coherent optical modulation according to an implementation form;

Fig. 15 shows a schematic diagram illustrating a method 1500 for dual polarization coherent optical demodulation according to an implementation form;

Fig. 16 shows a block diagram illustrating a dual polarization optical modulation device 1600 according to an implementation form; and

Fig. 17 shows a block diagram illustrating a dual polarization optical demodulation device 1700 according to an implementation form.

## DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

The devices and methods described herein may be based on coherent optical signal transmission and reception. It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The methods and devices described herein may be implemented in coherent optical transmitters and receivers, in particular transceivers using BPSK dual polarization modulation. The described devices and systems may include software units 123 and hardware units 125 as described above with respect to Figs. 1 and 2. The described devices and systems may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

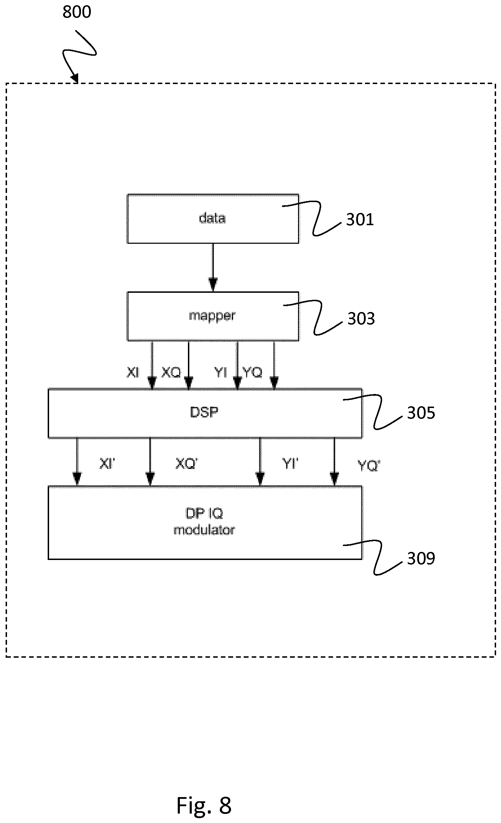

Fig. 8 shows a block diagram illustrating basic TX BPSK and QPSK blocks of a coherent optical transmitter 800 according to an implementation form. The coherent optical transmitter 800 forms the transmission part of a universal transceiver that supports BPSK and QPSK (4-PSK) modulation format without dramatic changing basic DSP algorithms. The coherent optical transmitter 800 comprises a mapper 303 for mapping incoming data bits 301 into the selected constellation. Tx DSP 305 processes data to compensate for circuits imperfections, shape signal spectra, compensate for channel imperfections, etc. A DAC (not depicted for simplicity reasons) produces four signal components XI, XQ, YI and YQ of a dual polarized signal. A dual polarization modulator 309 sends these signals in both polarizations via an optical link.

The coherent optical transmitter 800 supports blind equalization and therefore does not require sending known training sequences. In Fig. 8 the DAC block from transmitter side is omitted and only important blocks are presented. The simplest mapping rule to cover both BPSK and QPSK modulation format is described by the following mappings:

$$BPSK => XI=XQ \text{ and } YI=YQ$$

$$QPSK => XI \neq XQ \text{ and } YI \neq YQ.$$

As already stated, the CMA does not grant FIR convergence. The CMA requires signals with statistics "good enough" in order to demultiplex two polarizations. When constellation points have unequal probabilities and not all four quadrants are occupied the algorithm easily fails in the presence of PMD. Therefore, BPSK constellation often fails when higher order PMD is presented. So, if the classical CMA algorithm shall be used without any modification the BPSK data must be modified as described with respect to the following figures.

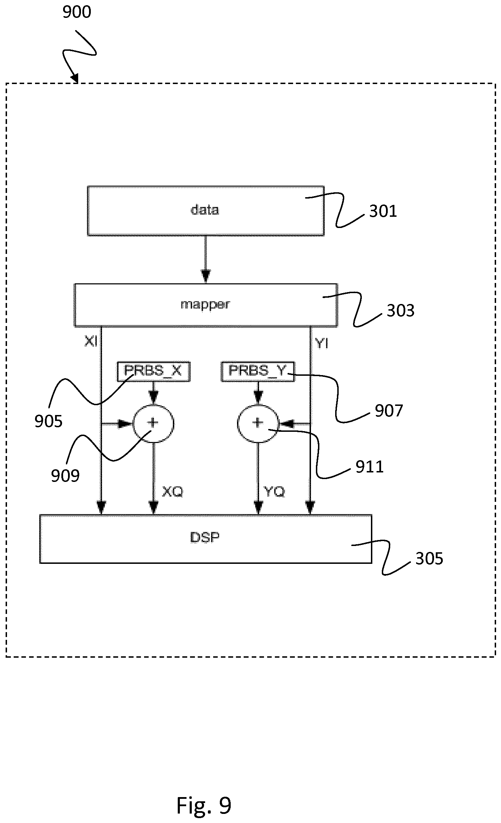

Fig. 9 shows a block diagram illustrating a coherent optical transmitter 900 including modifications for enabling CMA functionality according to an implementation form. The coherent optical transmitter 900 may correspond to the coherent optical transmitter 800 depicted in Fig. 8 in which additional mapping means are included between the mapper 303 and the DSP 305. Additional mapping means consist of first and second polarization PRBS sequence generators 905, 907 and related adders 909, 911.

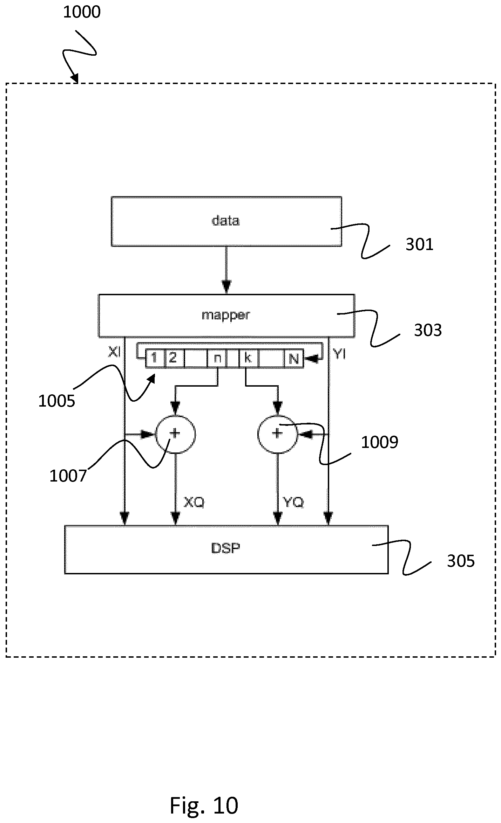

From the mapper 303 only in-phase components are available, XI and YI. These components are scrambled by the deterministic data generated by the pseudo-random binary sequence (PRBS) generators denoted by PRBS_X 905 and PRBS_Y 907. The data generated by the two PRBS blocks 905, 907 is not correlated or the correlation is only very weak. This may be achieved by using one PRBS and a delayed signal from the same PRBS, e.g. as described below with respect to Fig. 10. The PRBS structure and the delay must be carefully selected.

Fig. 10 shows a block diagram illustrating a coherent optical transmitter 1000 including BPSK signal scrambling according to an implementation form. The coherent optical transmitter 1000 may correspond to the coherent optical transmitter 900 depicted in Fig. 9 in which one PRBS generator 1005 is used for generating the two PRBS sequences PRBS_X and PRBS_Y.

A PRBS of length $N$ is used for in-quadrature signal generation. In an implementation form, the PRBS sequence is previously constructed and just entered to the shift register that performs the circular shifting. Two positions of the shift register are output to the scrambling circuits (in Fig. 10, the positions $n$ and $k$ are selected). Scrambling may be performed by using modulo 2 addition blocks (cycles with + sign denotes sum of modulo 2 operation).

In an implementation, a PRBS structure of length 8 is used as it was found that a PRBS structure of length 8 is sufficient to provide correct CMA functionality. In one example, the sequence may be of the structure: 0 0 0 1 0 1 1 1. The outputs $n$=1 and $k$=5 are selected so that Q scrambling components are according to:

 X-Q: 0 0 0 1 0 1 1 1 and
 Y-Q: 0 1 1 1 0 0 0 1.

The sequence may be of any structure formed by the any combination of 0 and/or 1. The sequence may be of any structure formed by the any combination of 00, 01, 10 and/or 11.

For such structure, there exist all 4 two-bit binary combinations, 00, 01, 10, and 11 with the same probabilities. It has been found that this structure enables CMA convergence in any PMD scenario. Performance of back-to-back case (CMA is not required; perfect case) and performance with PMD (CMA active) are identical (no penalty is observed).

The BPSK constellation has only 2 points that are denoted by 00 and 11. 0 shall correspond to -1 and 1 shall correspond to 1 in BPSK constellation. Then, if the PRBS signal has the value 0 the original point is sent, and when PRBS signal is equal to 1 the point is rotated by - $\pi$/2.

Denoting the original constellation points by $A$, $A$=(--, ++) and PRBS signal by $B$, $B$=(0,1), the following relations hold:

$$B=0 => A=(- -,+ +)$$

$$B=1 => A=(- +,+ -).$$

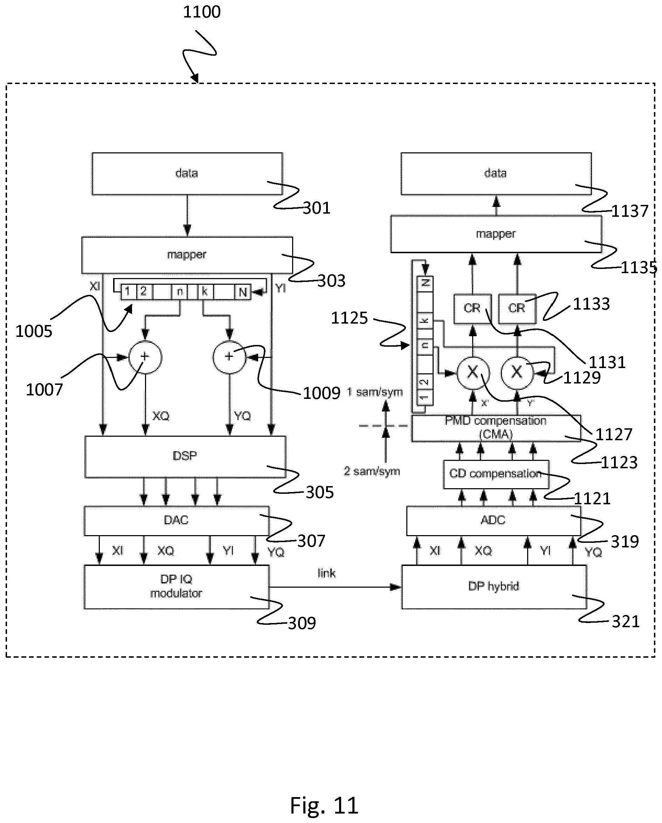

Fig. 11 shows a block diagram illustrating a coherent optical BPSK transceiver 1100 including BPSK signal scrambling and descrambling according to an implementation form. The transmitter side may correspond to the coherent optical transmitter 1000 as depicted in Fig. 10. The receiver side may comprise a DP hybrid 321 and DAC converters 319 as described above with respect to Fig. 3. After the DAC converters 319 the received signal passes a CD compensation block 1121, a PMD compensation block 1123, mapping means or descrambling means with a PRBS generator 1125 and two multipliers 1127, 1129, one carrier recovery block per polarization and a mapper 1135 to reconstruct the data 1137.

The scrambler configuration (of the transmitter) is known at the receiver side. The PRBS generator 1125 depicted in Fig. 11 may be implemented by a shifter using that known scrambling sequence. After CD and PMD compensation 1121, 1123 the samples are rotated by 0 or $+\pi/2$ when the synchronization is established.

In one example, the transmitter shifter 1005 value at the position $i$ are denoted by $w(i)$ that can have value either 0 or 1. The shifter 1125 at the receiver side will have value $\exp(j\,w(i)\pi/2)$. The shifter 1225 can keep 0 and 1 value so that multipliers 1127, 1129 are not required. The only required operation may be the following: *

$$x'=a+jb - \text{FIR output}$$

$$w(i)=0 => x=x'$$

$$w(i)=1 => x=jx'=-b+ja.$$

The four-points constellation will be converted to BPSK constellation. The carrier recovery blocks 1131, 1133 may use the same structure as the one for the QPSK signal with exception that some operations are simplified. When the Viterbi&Viterbi algorithm is used as described by "A. J. Viterbi and A. M. Viterbi, Nonlinear estimation of PSK-modulated carrier phase with application to burst digital transmission, IEEE Transactions on Information Theory, 29, 543-551 (1983)" the rule is simple due to the following reasons: The QPSK CR uses $4^{th}$ power operation, and the BPSK CR uses $2^{nd}$ power operation. This way, the receiver saves the power and delivers better performance since BPSK CR generates less cycle slips than QPSK CR under the same conditions.

The PRBS synchronization can be established using framing pattern. Also, it can be simply realized by shifting PRBS by one position and looking at the signal constellation. PRBS is shifted until the constellation has only two points. When the synchronization is achieved the output gates of the CR 1131, 1133 are open and data can be decoded.

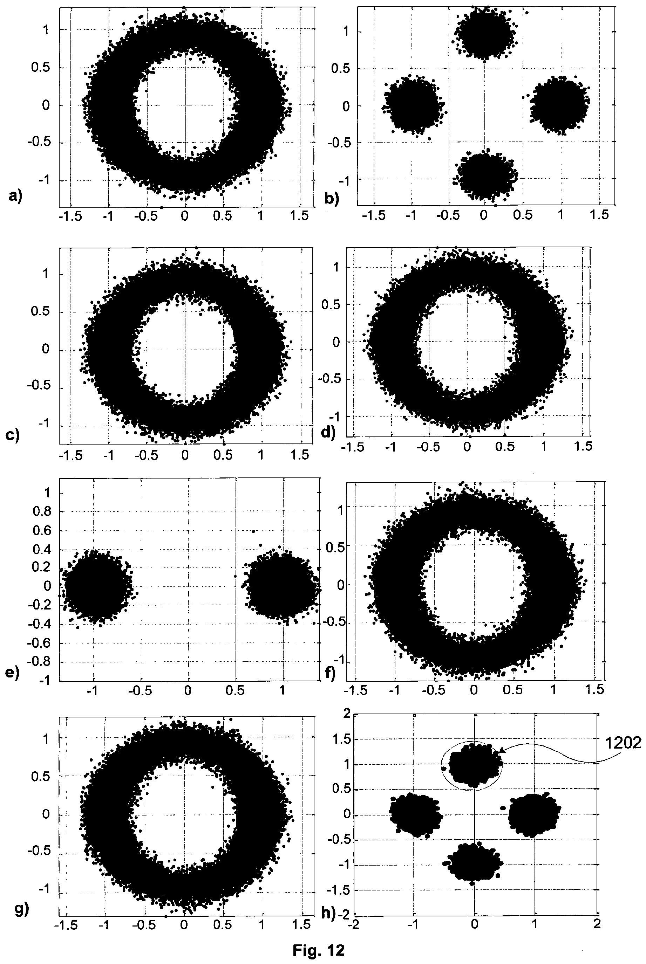

Fig. 12 a) to h) show receiver output signal constellations of the transceiver 1100 depicted in Fig. 11 for 8 different shifts of the scrambling sequence according to an implementation form. Fig. 12a) shows shift=0 configuration; Fig. 12b) shows shift=1 configuration; Fig. 12c) shows shift=2 configuration; Fig. 12d) shows shift=3 configuration; Fig. 12e) shows shift=4 configuration; Fig. 12f) shows shift=5 configuration; Fig. 12g) shows shift=6 configuration; Fig. 12h) shows shift=7 configuration.

The results of a simulation of the transmission system depicted in Fig. 11 with aforementioned scrambling sequence of length 8 are illustrated in Fig. 12a) to h). After shifting PRBS by 4 the data are synchronized. To declare synchronization failure, data within the cycle 1202 of the shift=7 constellation depicted in Fig. 12 h) can be counted and when they cross certain threshold the shift should be increased by 1. The procedure is repeated until a few data within the cycle 1202 are counted, e.g. the allowed probability of such events can be set to 0.05 in one example or even less in another example depending on the working conditions.

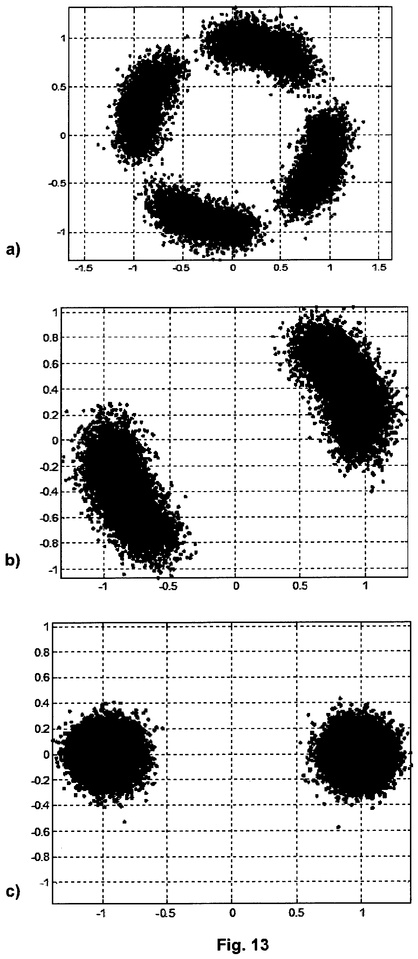

Fig. 13 a) to c) show receiver output signal constellations of the transceiver 1100 depicted in Fig. 11 for BPSK scrambled transmission according to an implementation form, where

Fig. 13a) shows the constellation after the FIR filter 1123,
Fig. 13b) shows the constellation after the descrambling 1125, 1127, 1129 and
Fig. 13c) shows the constellation after carrier recovery 1131, 1133.

The constellation after the FIR filter 1123 using the CMA in case of BPSK scrambled transmission is shown in Fig. 13a. The signal is distorted by additive noise, laser phase noise and the residual frequency offset. A small number of constellation points was used to better visualize the signal processing. Four groups of data are visible that indicate QPSK signal constellation. After descrambling the signal is converted to the BPSK constellation as shown in Fig. 13b. Using Viterbi&Viterbi algorithm with $2^{nd}$ power operation in the CR block 1131, 1133 the residual frequency offset is compensated and the laser noise is controlled. The signal after the CR block 1131, 1133 is shown in Fig. 13c clearly indicating BPSK constellation.

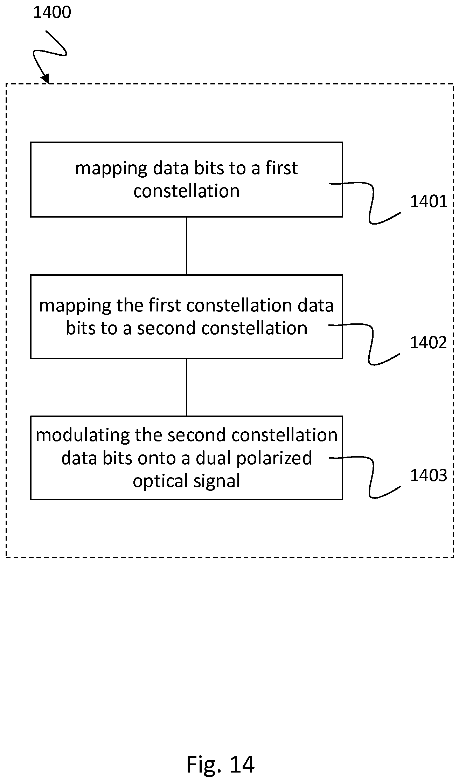

Fig. 14 shows a schematic diagram illustrating a method 1400 for dual polarization coherent optical modulation according to an implementation form. The method may include mapping 1401 data bits to a first constellation according to a first modulation format to provide first constellation data bits. The method may include mapping 1402 the first constellation data bits to a second constellation according to a second modulation format to provide second constellation data bits, wherein the second constellation comprises a higher number of constellation points than the first constellation. The method may include modulating 1403 the second constellation data bits onto a dual polarized optical signal, wherein the optical signal comprises a first polarization component (X) and a second polarization component (Y).

In one example, the second constellation includes a multiple of the constellation points of the first constellation. In one example, constellation points of the first constellation are a subset of constellation points of the second constellation. In one example, constellation points of the second constellation are generated based on scrambling the first constellation data bits. In one example, the second constellation includes constellation points in all four quadrants of the constellation and all of the constellation points have roughly equal probabilities. In one example, the first modulation format includes a binary phase shift keying, BPSK, modulation format or any irregular constellation which a constant modulus algorithm, CMA is unable to reliably detect; and the second modulation format comprises any regular constellation which a constant modulus algorithm, CMA is able to reliably detect, in particular one of the following: a quadrature phase shift keying, PSK, modulation format, a quadrature amplitude, QAM, modulation format. In one example, the first modulation format includes a binary phase shift keying, BPSK, modulation format or any irregular constellation which a multi modulus algorithm, MMA is unable to reliably detect; and the second modulation format includes any regular constellation which a multi modulus algorithm, MMA is able to reliably detect, in particular one of the following: a quadrature phase shift keying, PSK, modulation format, a quadrature amplitude, QAM, modulation format.

The mapping 1401 data bits to a first constellation according to a first modulation format to provide first constellation data bits may correspond to the mapping of the mapper 301 described above with respect to Figs. 3, 8, 9, 10, 11. The mapping 1402 the first constellation data bits to a second constellation according to a second modulation format to provide second constellation data bits may correspond to the mapping 1005, 1007, 1009 as described above with respect to Figs. 10 and 11 or to the mapping 905, 907, 909, 911 as described above with respect to Fig. 9. The modulating 1403 may correspond to the dual polarization modulating performed by the modulator 309 described above with respect to Figs. 3, 8, 11.

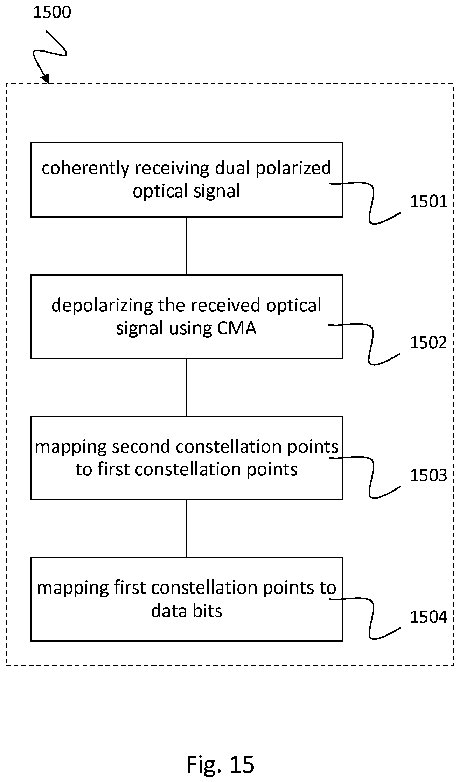

Fig. 15 shows a schematic diagram illustrating a method 1500 for dual polarization coherent optical demodulation according to an implementation form. The method 1500 may include coherently receiving 1501 a dual polarized optical signal being modulated according to a second modulation format. The method 1500 may include depolarizing 1502 the dual-polarized optical signal by using a constant modulus algorithm, CMA to provide a depolarized optical signal. The depolarizing by CMA must be such that both polarizations of the depolarized optical signal are independent. The method 1500 may include mapping 1503 second constellation points of a second constellation of the depolarized optical signal to first constellation points arranged according to a first constellation of a first modulation format. The method 1500 may include mapping 1504 the first constellation points to first constellation data bits according to a first modulation format, wherein the first constellation comprises a lower number of constellation points than the second constellation.

In one example, mapping the second constellation points to first constellation points includes descrambling, in particular by using phase rotators, the second constellation points with a known descrambling sequence. In one example, the method further includes shifting the descrambling sequence until the derived constellation points are arranged according to the first constellation. In one example, depolarizing the dual polarized optical signal includes filtering the dual-polarized optical signal by a two input two output complex FIR filter to provide a first polarization component (X) and a second polarization component (Y) of the depolarized optical signal. In one example, the method further includes adjusting the two input two output FIR filter by blind equalization, in particular based on a constant modulus algorithm. In one example, the method further includes adjusting the two input two output FIR filter by blind equalization, in particular based on a multi modulus algorithm.

The coherently receiving 1501 a dual polarized optical signal may be performed by the DP hybrid 321 depicted in Figs. 3 and 11. The depolarizing 1502 the dual-polarized optical signal by using a constant modulus algorithm, CMA may be performed by the PMD compensation block 1123 as depicted in Fig. 11. The mapping 1503 second constellation points of a second constellation of the depolarized optical signal to first constellation points may be performed by the descrambling means 1125, 1127, 1129 and the CR blocks 1131, 1133 depicted in Fig. 11. The mapping 1504 the first constellation points to first constellation data bits may be performed by the mapper 1135 depicted in Fig. 11.

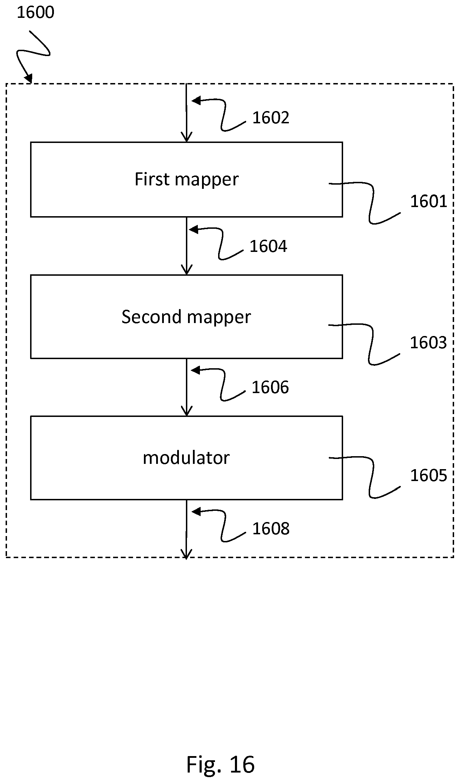

Fig. 16 shows a block diagram illustrating a dual polarization optical modulation device 1600 according to an implementation form. The DP optical modulation device 1600 may include a first mapper 1601 configured to map data bits 1602 to a first constellation according to a first modulation format to provide first constellation data bits 1604. The DP optical modulation device 1600 may include a second mapper 1603 configured to map the first constellation data bits 1604 to a second constellation according to a second modulation format to provide second constellation data bits 1606. The mapping may include scrambling the first constellation data bits 1604 with a scrambling sequence. The DP optical modulation device 1600 may include a modulator 1605 configured to provide a dual polarization optical signal 1608 based on the second constellation data bits 1606.

The first mapper 1601 may correspond to the mapper 301 described above with respect to Figs. 3, 8, 9, 10, 11. The second mapper 1603 may implement the mapping 1005, 1007, 1009 as described above with respect to Figs. 10 and 11 or the mapping 905, 907, 909, 911 as described above with respect to Fig. 9. The modulator 1605 may correspond to the modulator 309 described above with respect to Figs. 3, 8, 11.

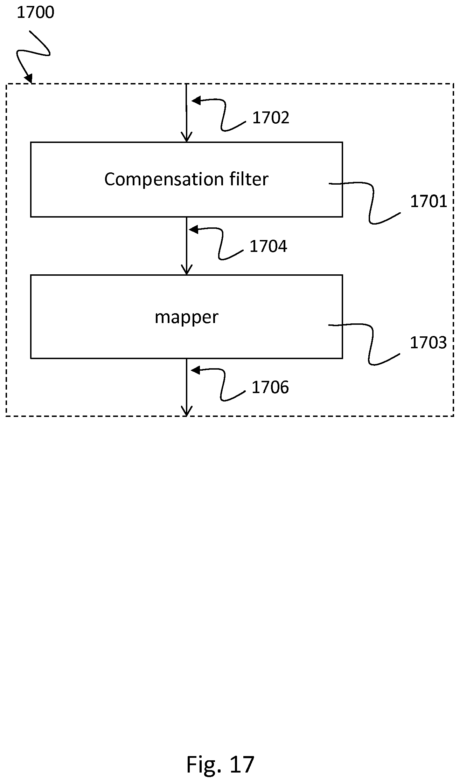

Fig. 17 shows a block diagram illustrating a dual polarization optical demodulation device 1700 according to an implementation form. The DP optical demodulation device 1700 may include a compensation filter 1701 configured to filter a dual polarized optical signal 1702 to provide a dispersion compensated optical signal comprising second constellation data bits 1704 arranged according to a second modulation format. The DP optical demodulation device 1700 may include a mapper 1703 configured to map the second constellation data bits 1704 to first constellation data bits 1706 arranged according to a first modulation format. The mapping of the mapper 1703 may be based on descrambling the second constellation data bits 1704 with a known scrambling sequence.

The compensation filter 1701 may correspond to the PMD compensation block 1123 as depicted in Fig. 11. The mapper 1703 may correspond to the descrambling means 1125, 1127, 1129 and the CR blocks 1131, 1133 depicted in Fig. 11.

The methods, systems and devices described herein provide a method for blind channel acquisition in dual polarization BPSK optical transmission systems suffering from PMD impairments and a method for supporting the polarization decomposition in coherent optical systems using irregular constellations.

The methods, systems and devices described herein may be implemented as software 123 in a Digital Signal Processor (DSP) 121, in a micro-controller or in any other side-processor or as hardware circuit 125 within an application specific integrated circuit (ASIC) of a Digital Signal Processor (DSP) 121 as described above with respect to Fig. 1.

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein, in particular the method 1400 as described above with respect to Fig. 14 and the techniques described above with respect to Figs. 8 to 13. Such a computer program product may include a readable storage medium storing program code thereon for use by a computer, the program code may perform the method 1400 as described above with respect to Fig. 14.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (1400) for dual polarization coherent optical modulation, the method comprising:

   mapping (1401) data bits to a first constellation according to a first modulation format to provide first constellation data bits;
   mapping (1402) the first constellation data bits to a second constellation according to a second modulation format to provide second constellation data bits, wherein the second constellation comprises a higher number of constellation points than the first constellation; and

modulating (1403) the second constellation data bits onto a dual polarized optical signal, wherein the optical signal comprises a first polarization component (X) and a second polarization component (Y).

2. The method (1400) of claim 1,
wherein the second constellation comprises a multiple of the constellation points of the first constellation.

3. The method (1400) of claim 1 or 2,
wherein constellation points of the first constellation are a subset of constellation points of the second constellation.

4. The method (1400) of claim 3,
wherein constellation points of the second constellation are generated based on scrambling the first constellation data bits.

5. The method (1400) of one of claims 1 to 4,
wherein the first modulation format comprises a binary phase shift keying, BPSK, modulation format or any irregular constellation which a constant modulus algorithm, CMA is unable to reliably detect; and
wherein the second modulation format comprises any regular constellation which a constant modulus algorithm, CMA is able to reliably detect, in particular one of the following:

a quadrature phase shift keying, PSK, modulation format,
a quadrature amplitude, QAM, modulation format.

6. The method (1400) of one of claims 1 to 4,
wherein the first modulation format comprises a binary phase shift keying, BPSK, modulation format or any irregular constellation which a multi modulus algorithm, MMA is unable to reliably detect; and
wherein the second modulation format comprises any regular constellation which a multi modulus algorithm, MMA is able to reliably detect, in particular one of the following:

a quadrature phase shift keying, PSK, modulation format,
a quadrature amplitude, QAM, modulation format.

7. A method (1500) for dual polarization coherent optical demodulation, the method comprising:

coherently receiving (1501) a dual polarized optical signal being modulated according to a second modulation format;
depolarizing (1502) the dual-polarized optical signal by using a constant modulus algorithm, CMA to provide a depolarized optical signal;
mapping (1503) second constellation points of a second constellation of the depolarized optical signal to first constellation points arranged according to a first constellation of a first modulation format; and
mapping (1504) the first constellation points to first constellation data bits according to a first modulation format, wherein the first constellation comprises a lower number of constellation points than the second constellation.

8. The method (1500) of claim 7,
wherein mapping (1503) the second constellation points to first constellation points comprises descrambling, in particular by using phase rotators, the second constellation points with a known descrambling sequence.

9. The method (1500) of claim 8, comprising:
shifting the descrambling sequence until the derived constellation points are arranged according to the first constellation.

10. The method (1500) of one of claims 7 to 9,
wherein depolarizing (1502) the dual polarized optical signal comprises: filtering the dual-polarized optical signal by a two input two output complex FIR filter (400, 500) to provide a first polarization component (X) and a second polarization component (Y) of the depolarized optical signal;

11. The method (1500) of claim 10, comprising:
adjusting (501) the two input two output FIR filter (500) by blind equalization, in particular based on a constant modulus algorithm.

**12.** A dual polarization optical modulation device (1600), comprising:

a first mapper (1601) configured to map data bits (1602) to a first constellation according to a first modulation format to provide first constellation data bits (1604);

a second mapper (1603) configured to map the first constellation data bits (1604) to a second constellation according to a second modulation format to provide second constellation data bits (1606), wherein the mapping comprises scrambling the first constellation data bits (1604) with a scrambling sequence; and

a modulator (1605) configured to provide a dual polarization optical signal (1608) based on the second constellation data bits (1606).

**Patentansprüche**

**1.** Verfahren (1400) für kohärente optische Doppelpolarisationsmodulation, wobei das Verfahren aufweist:

Zuordnen (1401) von Datenbits zu einer ersten Konstellation gemäß einem ersten Modulationsformat, um die ersten Konstellationsdatenbits bereitzustellen;

Zuordnen (1402) der ersten Konstellationsdatenbits zu einer zweiten Konstellation gemäß einem zweiten Modulationsformat, um die zweiten Konstellationsdatenbits bereitzustellen, wobei die zweite Konstellation eine höhere Anzahl an Konstellationspunkten aufweist als die erste Konstellation; und

Modulieren (1403) der zweiten Konstellationsdatenbits auf ein doppelpolarisiertes optisches Signal, wobei das optische Signal eine erste Polarisationskomponente (X) und eine zweite Polarisationskomponente (Y) aufweist.

**2.** Verfahren (1400) nach Anspruch 1,
wobei die zweite Konstellation ein Vielfaches der Konstellationspunkte der ersten Konstellation aufweist.

**3.** Verfahren (1400) nach Anspruch 1 oder 2,
wobei Konstellationspunkte der ersten Konstellation eine Untergruppe von Konstellationspunkten der zweiten Konstellation sind.

**4.** Verfahren (1400) nach Anspruch 3,
wobei Konstellationspunkte der zweiten Konstellation basierend auf dem Verschlüsseln der ersten Konstellationsdatenbits erzeugt werden.

**5.** Verfahren (1400) nach einem der Ansprüche 1 bis 4,
wobei das erste Modulationsformat ein Zweiphasenumtastungs- BPSK - Modulationsformat oder irgendeine unregelmäßige Konstellation aufweist, bei der ein Konstant-Modul-Algorithmus CMA unfähig ist, sie zuverlässig zu detektieren;
und
wobei das zweite Modulationsformat irgendeine regelmäßige Konstellation aufweist, die ein Konstant-Modul-Algorithmus CMA zuverlässig detektieren kann, und insbesondere eine der Folgenden:

ein Quadraturphasenumtastungs- PSK -Modulationsformat,
ein Quadraturamplituden- QAM -Modulationsformat.

**6.** Verfahren (1400) nach einem der Ansprüche 1 bis 4,
wobei das erste Modulationsformat ein Zweiphasenumtastungs- BPSK - Modulationsformat oder irgendeine unregelmäßige Konstellation aufweist, bei der ein Multi-Modul-Algorithmus MMA unfähig ist, sie zuverlässig zu detektieren; und wobei das zweite Modulationsformat irgendeine regelmäßige Konstellation aufweist, die ein Multi-Modul-Algorithmus MMA zuverlässig detektieren kann, und insbesondere eine der Folgenden:
ein Quadraturphasenumtastungs- PSK -Modulationsformat, ein Quadraturamplituden- QAM -Modulationsformat.

**7.** Verfahren (1500) für kohärente optische Doppelpolarisationsdemodulation, wobei das Verfahren aufweist:

kohärentes Empfangen (1501) eines doppelpolarisierten optischen Signals, das gemäß einem zweiten Modulationsformat moduliert ist;

Depolarisieren (1502) des doppelpolarisierten optischen Signals unter Verwendung eines Konstant-Modul-Algorithmus CMA, um ein depolarisiertes optisches Signal bereitzustellen;

Zuordnen (1503) von zweiten Konstellationspunkten einer zweiten Konstellation des depolarisierten optischen Signals zu ersten Konstellationspunkten, die gemäß einer ersten Konstellation eines ersten Modulationsformats angeordnet sind; und

Zuordnen (1504) der ersten Konstellationspunkte zu den ersten Konstellationsdatenbits gemäß einem ersten Modulationsformat, wobei die erste Konstellation eine niedrigere Anzahl an Konstellationspunkten aufweist als die zweite Konstellation.

**8.** Verfahren (1500) nach Anspruch 7,
wobei das Zuordnen (1503) der zweiten Konstellationspunkte zu den ersten Konstellationspunkten das Entschlüsseln, insbesondere unter Verwendung von Phasenrotatoren, der zweiten Konstellationspunkte mit einer bekannten Entschlüsselungssequenz aufweist.

**9.** Verfahren (1500) nach Anspruch 8, aufweisend:
Verschieben der Entschlüsselungssequenz, bis die abgeleiteten Konstellationspunkte gemäß der ersten Konstellation angeordnet sind.

**10.** Verfahren (1500) nach einem der Ansprüche 7 bis 9,
wobei das Depolarisieren (1502) des doppelpolarisierten optischen Signals aufweist: Filtern des doppelpolarisierten optischen Signals durch einen Zwei-Eingang-Zwei-Ausgang-Komplex-FIR-Filter (400, 500), um eine erste Polarisationskomponente (X) und eine zweite Polarisationskomponente (Y) des depolarisierten optischen Signals bereitzustellen;

**11.** Verfahren (1500) nach Anspruch 10, aufweisend:
Anpassen (501) des Zwei-Eingang-Zwei-Ausgang-FIR-Filters (500) durch blinde Entzerrung und insbesondere basierend auf einem Konstant-Modul-Algorithmus.

**12.** Optische Doppelpolarisiationsmodulationsvorrichtung (1600), aufweisend:

einen ersten Mapper (1601), der konfiguriert ist, Datenbits (1602) gemäß einem ersten Modulationsformat zu einer ersten Konstellation zuzuordnen, um die ersten Konstellationsdatenbits (1604) bereitzustellen;

einen zweiten Mapper (1603), der konfiguriert ist, die ersten Konstellationsdatenbits (1604) gemäß einem zweiten Modulationsformat zu einer zweiten Konstellation zuzuordnen, um die zweiten Konstellationsdatenbits (1606) bereitzustellen, wobei die Zuordnung das Verschlüsseln der ersten Konstellationsdatenbits (1604) mit einer Verschlüsselungssequenz aufweist; und

einen Modulator (1605), der konfiguriert ist, ein optisches Doppelpolarisationssignal (1608) basierend auf den zweiten Konstellationsdatenbits (1606) bereitzustellen.

**Revendications**

**1.** Procédé (1400) pour la modulation optique cohérente à double polarisation, le procédé comprenant :

la cartographie (1401) des bits de données sur une première constellation selon un premier format de modulation pour fournir des premiers bits de données de constellation ;

la cartographie (1402) des bits de données de la première constellation selon un second format de modulation pour fournir des seconds bits de données de constellation, dans lequel la seconde constellation comprend un nombre plus élevé de points de constellation que la première constellation ; et

la modulation (1403) des bits de données de la seconde constellation sur un signal optique à double polarisation, le signal optique comprenant une première composante de polarisation (X) et une seconde composante de polarisation (Y).

**2.** Procédé (1400) selon la revendication 1,
dans lequel la seconde constellation comprend un multiple des points de constellation de la première constellation.

**3.** Procédé (1400) selon la revendication 1 ou 2,
dans lequel les points de constellation de la première constellation sont un sous-ensemble des points de constellation de la seconde constellation.

4. Procédé (1400) selon la revendication 3,
dans lequel des points de constellation de la seconde constellation sont générés sur la base d'un brouillage des premiers bits de données de constellation.

5. Procédé (1400) selon l'une des revendications 1 à 4,
dans lequel le premier format de modulation comprend un format de modulation par clé de déphasage binaire, BPSK, ou toute autre constellation irrégulière qu'un algorithme à module constant, CMA, est incapable de détecter de manière fiable ; et dans lequel le second format de modulation comprend toute constellation régulière qu'un algorithme à module constant, CMA, est capable de détecter de manière fiable, en particulier l'un des éléments suivants :

un format de modulation par déphasage en quadrature de phase, PSK,
un format de modulation d'amplitude en quadrature, QAM.

6. Procédé (1400) selon l'une des revendications 1 à 4,
dans lequel le premier format de modulation comprend un format de modulation par clé de déphasage binaire, BPSK, ou toute autre constellation irrégulière qu'un algorithme à module multiple, MMA, est incapable de détecter de manière fiable ; et dans lequel le second format de modulation comprend toute constellation régulière qu'un algorithme à module multiple, MMA, est capable de détecter de manière fiable, en particulier l'un des formats suivants :

un format de modulation par déphasage en quadrature de phase, PSK,
un format de modulation d'amplitude en quadrature, QAM.

7. Procédé (1500) de démodulation optique cohérente à double polarisation, le procédé comprenant :

la réception de manière cohérente (1501) d'un signal optique à double polarisation modulé selon un second format de modulation ;
la dépolarisation (1502) du signal optique à double polarisation en utilisant un algorithme à module constant, CMA pour fournir un signal optique dépolarisé ;
la cartographie (1503) des points de seconde constellation d'une seconde constellation du signal optique dépolarisé sur des points de la première constellation disposés selon une première constellation d'un premier format de modulation ; et
la cartographie (1504) des points de la première constellation avec les premiers bits de données de constellation selon un premier format de modulation, dans lequel la première constellation comprend un nombre inférieur de points de constellation par rapport à la seconde constellation.

8. Procédé (1500) selon la revendication 7,
dans lequel la cartographie (1503) des points de la seconde constellation vers des points de la première constellation comprend l'élimination du brouillage, en particulier en utilisant des rotateurs de phase, des points de la seconde constellation avec une séquence connue d'élimination du brouillage.

9. Procédé (1500) selon la revendication 8, comprenant :
le déplacement de la séquence d'élimination du brouillage jusqu'à ce que les points de la constellation dérivée soient disposés selon la première constellation.

10. Procédé (1500) selon l'une des revendications 7 à 9,
dans lequel la dépolarisation (1502) du signal optique à double polarisation comprend : le filtrage du signal optique à double polarisation par un filtre FIR complexe à deux entrées et à deux sorties (400, 500) pour fournir une première composante de polarisation (X) et une seconde composante de polarisation (Y) du signal optique dépolarisé.

11. Procédé (1500) selon la revendication 10, comprenant :
le réglage (501) du filtre FIR à deux entrées et à deux sorties (500) par égalisation en aveugle, en particulier sur la base d'un algorithme à module constant.

12. Dispositif de modulation optique à double polarisation (1600), comprenant :

un premier système de cartographie (1601) configuré pour cartographier des bits de données (1602) sur une première constellation selon un premier format de modulation pour fournir des bits de données de la première constellation (1604) ;

un second système de cartographie (1603) configuré pour cartographier des bits de données de la première constellation (1604) sur une seconde constellation selon un premier format de modulation pour fournir des bits de données de la seconde constellation (1606), dans lequel la cartographie comprend le brouillage des bits de données de la première constellation (1604) avec une séquence de brouillage ; et

un modulateur (1605) configuré pour fournir un signal optique à double polarisation (1608) basé sur les bits de données de la seconde constellation (1606).

100

101

109    113    115    117    119    103    121

Rx analog part                VX_AGC        Rx digital part

| | | | XI | DSP |
LO → 2pol hybrid → OFE → AGC → ADC — XI → software — 123
optical signal → OFE → AGC → ADC — XQ
OFE → AGC → ADC — YI → hardware — 125
OFE → AGC → ADC — YQ
optical path    electrical path    VY_AGC

111    105    107

Fig. 1

**200**

**125**

**123**

software

hardware

**119**

**209**

**211**

**215**

**217**

**219**

**221**

XI

ADC

XQ

ADC

YI

ADC

YQ

ADC

offset and gain adjustment (AGC)

CD compensation (FFT) X pol

**213**

CD compensation (FFT) Y pol

Frequency recovery

PMD, CD compensation and depolarization (FIR)

carrier recovery

decoding and frame detection

VCO

Timing estimation

**223**

**203**

Fig. 2

300

Fig. 3

400

$$\overline{U}_X = \overline{I}_X + j\overline{Q}_X$$

| X-X | 401 |

| Y-X | 403 |

| X-Y | 405 |

$$\overline{U}_Y = \overline{I}_Y + j\overline{Q}_Y$$

| Y-Y | 407 |

$$+ \quad 409 \quad \overline{m}_X$$

$$+ \quad 411 \quad \overline{m}_Y$$

Fig. 4

500

FIR taps
calculation
501

$\overline{U}_X$

X-X
401

$\overline{U}_Y$

Y-X
403

+

$\overline{m}_X$

409

Fig. 5

a)                              b)

before FIR filters

after FIR filters

c)                              d)

601                             602

Fig. 6

a)

b)

**Fig. 7**

800

data — 301

mapper — 303

XI  XQ  YI  YQ

DSP — 305

XI'  XQ'  YI'  YQ'

DP IQ
modulator — 309

Fig. 8

900

data — 301

mapper — 303

XI    YI

PRBS_X    PRBS_Y

905    907

909    911

XQ    YQ

DSP — 305

Fig. 9

Fig. 10

Fig. 11

**Fig. 12**

Fig. 13

1400

mapping data bits to a first constellation — 1401

mapping the first constellation data bits to a second constellation — 1402

modulating the second constellation data bits onto a dual polarized optical signal — 1403

Fig. 14

1500

coherently receiving dual polarized
optical signal — 1501

depolarizing the received optical
signal using CMA — 1502

mapping second constellation points
to first constellation points — 1503

mapping first constellation points to
data bits — 1504

Fig. 15

1600

First mapper — 1601

1602

Second mapper — 1603

1604

modulator — 1605

1606

1608

Fig. 16

1700

Compensation filter — 1701

1702

1704

mapper — 1703

1706

Fig. 17

**EP 3 078 134 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013139368 A1
- EP 2385637 A1
- US 6538787 B1

### Non-patent literature cited in the description

- **G. PROAKIS.** Digital Communications. McGraw-Hill, 2001
- **A. J. VITERBI ; A. M. VITERBI.** Nonlinear estimation of PSK-modulated carrier phase with application to burst digital transmission. *IEEE Transactions on Information Theory,* 1983, vol. 29, 543-551